# EUROPÄISCHE PATENTSCHRIFT

(11) **EP 4 023 919 B1**
(45) Veröffentlichungstag und Bekanntmachung des Hinweises auf die Patenterteilung: **03.07.2024**
(21) Anmeldenummer: 21212081.0
(22) Anmeldetag: 02.12.2021
(51) Int. Cl.: F16L 11/11, F16L 11/118, F16L 11/12, F16L 11/15

(54) **FLUIDLEITUNG**
FLUID CONDUIT
CONDUITE DE FLUIDE

(30) Priorität: 30.12.2020 DE 102020135096
(43) Veröffentlichungstag der Anmeldung: 06.07.2022
(73) Patentinhaber: Fränkische Rohrwerke Gebr. Kirchner GmbH & Co. KG, 97486 Königsberg (DE)
(72) Erfinder: GERBER, Heiko, 97483 Eltmann (DE); WERNER, Johannes, 97486 Königsberg (DE)
(74) Vertreter: Weickmann & Weickmann PartmbB

(56) Entgegenhaltungen:
- WO-A1-2010/088773
- DE-U1-202005 007 835
- DE-U1-202008 017 940
- US-A- 4 024 894

## Beschreibung

Die vorliegende Erfindung betrifft eine Fluidleitung, welche in ihrem Inneren einen Fluidströmungskanal definiert.

Gerade im Bereich der Gebäudetechnik werden, zum Beispiel zum Führen von Luft, Fluidleitungen in Wänden und Böden bzw. Decken verlegt, welche dazu eingerichtet sind, beispielsweise erwärmte oder gekühlte, Luft von einer zentralen Lüftungsanlage in jeweilige Räume, und zurück, zu fördern. Dabei ist es zumeist erforderlich, dass die verwendeten Fluidleitungen in alle Richtungen gut biegbar sind, um ein Verlegen auch entlang engen Krümmungsradien zu ermöglichen.

Hierzu bietet sich besonders an, Fluidleitungen zu verwenden, welche als Wellrohre ausgebildet sind. Bevorzug werden in Böden und Decken eines Gebäudes Fluidleitungen mit einem abgeflachten, das heißt nicht-kreisförmigen, Querschnitt verwendet, um bei geringerer Bauhöhe, aber dafür größerer Breite, einer solchen Fluidleitung, im Vergleich zu Fluidleitungen mit kreisförmigem Querschnitt, vergleichbare Strömungsraten erreichen zu können. Jedoch weisen Wellrohre den Nachteil auf, dass sich in den Vertiefungen der gewellten Innenseite einer jeweiligen Fluidleitung Schmutz und Wasser ansammeln können, wodurch es zu einer vermehrten Bakterienbildung kommen kann. Dies ist offensichtlich insbesondere bei der Verwendung im Bereich der Gebäudetechnik nicht gewünscht oder sogar unzulässig.

Ein Verschließen der Vertiefungen der gewellten Innenseite eines Wellrohrs führt jedoch, insbesondere bei nicht-kreisrunden Fluidleitungen, dazu, dass sich das Biegeverhalten signifikant verschlechtert. Dieser Effekt kommt insbesondere bei Fluidleitungen zum Tragen, welche einen nicht-kreisförmigen Querschnitt aufweisen, da hier ein Biegen in einer Richtung, in welcher der Querschnitt der Fluidleitung eine größere, insbesondere seine größte, Sehne aufweist, bereits durch die Geometrie der Fluidleitung selbst erschwert ist.

Aus der WO 2010/088 773 A1, welche als nächstliegender Stand der Technik erachtet wird, ist eine Fluidleitung bekannt, welche eine Querschnittsform aufweist, welche von einer Kreisform verschieden ist, und deren Wandung eine innere Schicht und eine äußere Schicht aufweist, wobei die innere Schicht die Innenseiten von zueinander benachbarten Wellentälern der äußeren Schicht in einer kürzeren Distanz verbindet als der Verlauf der äußeren Schicht zwischen benachbarten Wellentälern davon. Ferner sei auf die Dokumente DE 20 2005 007 835 U1 sowie DE 20 2008 017 940 U1 hingewiesen.

Aus diesem Grund ist es eine Aufgabe der vorliegenden Erfindung, eine Fluidleitung bereitzustellen, welche sowohl hohen Hygieneanforderungen entspricht als auch ein gutes Biegeverhalten aufweist.

Diese Aufgabe wird gemäß der vorliegenden Erfindung durch eine Fluidleitung gelöst, welche in ihrem Inneren einen Fluidströmungskanal definiert, umfassend
eine äußere Schicht, welche als Wellrohr mit einer Abfolge von Wellentälern und Wellenbergen, welche nach radial außen weiter vorstehen als die Wellentäler, ausgebildet ist, und
eine innere Schicht, welche innerhalb der äußeren Schicht aufgenommen ist,
wobei die äußere Schicht in einem Querschnitt, welcher zu einer Haupterstreckungsrichtung des Fluidströmungskanals rechtwinklig ist, eine Form aufweist, welche von einer Kreisform verschieden ist, und welche wenigstens einen Seitenabschnitt sowie wenigstens eine Hauptfläche umfasst,
wobei die innere Schicht derart an der zu dem Fluidströmungskanal weisenden Seite einer jeweiligen Hauptfläche angebracht ist, dass, in einer im Wesentlichen geraden Ausrichtung der Fluidleitung, die innere Schicht die Innenseiten von zueinander benachbarten Wellentälern der äußeren Schicht in einer kürzeren Distanz verbindet, verglichen mit dem Verlauf der äußeren Schicht zwischen benachbarten Wellentälern davon,
wobei eine zu dem Fluidströmungskanal weisende Innenseite eines jeweiligen Seitenabschnitts, der Abfolge von Wellentälern und Wellenbergen folgend, gewellt ausgebildet ist.

Das heißt insbesondere kann eine erfindungsgemäße Fluidleitung, in Umfangsrichtung betrachtet, aus lediglich wenigstens einer Hauptfläche und wenigstens einem Seitenabschnitt aufgebaut sein, wobei eine Innenwand der Fluidleitung, welche den Fluidströmungskanal entlang eines entsprechenden Abschnitts definiert, im Bereich einer Hauptfläche im Wesentlichen glatt ausgebildet ist, verglichen mit dem Verlauf der äußeren Schicht von einem Wellental zu einem benachbarten Wellental, in einer axialen Haupterstreckungsrichtung des Fluidströmungskanals betrachtet.

Für den Fall, dass die Fluidleitung lediglich aus Hauptflächen und Seitenabschnitten besteht, so kann sich beiderseits einer jeweiligen Hauptfläche in der Umfangsrichtung der Fluidleitung ein entsprechender Seitenabschnitt anschließen.

In Bezug auf eine verbesserte Biegbarkeit der Fluidleitung kann es vorteilhaft sein, dass an denjenigen diametral gegenüberliegenden Abschnitten, an welchen eine größte Sehne der Fluidleitung eine Wand der Fluidleitung schneidet, Seitenabschnitte angeordnet sind. Die Fluidleitung kann, insbesondere entlang der größten Sehne der Fluidleitung, das heißt zu einer Mittelebene, welche zu der größten Sehne der Fluidleitung senkrecht ist und von beiden Schnittpunkten dieser Sehne mit einem jeweiligen Wandabschnitt der Fluidleitung gleichbeabstandet ist, symmetrisch ausgebildet sein. Ferner kann es vorteilhaft sein, dass die Fluidleitung einen Boden aufweist, das heißt einen Wandabschnitt, welcher aufgrund seiner Geometrie, beispielsweise eines geraden Verlaufs der Wand der Fluidleitung, dazu eingerichtet ist, in einem montierten Zustand der Fluidleitung, in Schwerkraftsrichtung, unten positioniert zu sein, wobei der Boden als Hauptfläche ausgebildet ist. Auf diese Weise kann der Boden an der zu dem Fluidströmungskanal weisenden Seite glatt (das heißt im Wesentlichen geradlinig in axialer Richtung der Fluidleitung über eine Mehrzahl an Wellenbergen und Wellentälern hinweg) ausgebildet sein, so dass eine Ansammlung von Schmutz und/oder Wasser vermieden werden kann. Des Weiteren ist es denkbar, dass die Fluidleitung derart ausgebildet ist, dass, entlang der Umfangsrichtung der Fluidleitung, die Summe der Erstreckung der Hauptflächen größer ist als die Summe der Erstreckung der Seitenabschnitte.

In einer beispielhaften Ausführungsform der erfindungsgemäßen Fluidleitung kann diese als Oval mit geraden langen Seiten, welche die Hauptflächen darstellen, ausgebildet sein. Die Seitenabschnitte bilden hierbei die kurzen Seiten des Ovals und können zum Beispiel halbkreisbogenförmig ausgebildet sein. Liegt die Fluidleitung nun mit einer der beiden Hauptflächen auf einem Untergrund auf, so kann die Fluidleitung einfach in einer vertikalen Richtung, das heißt um eine horizontal verlaufende Achse, aufgrund der gesamten Geometrie der Fluidleitung gebogen werden. In einer seitlichen Richtung, das heißt um eine vertikal verlaufende Achse, kann die erfindungsgemäße Fluidleitung nun ebenfalls gut gebogen werden, da die Seitenabschnitte sowohl an ihrer Außenseite als auch an ihrer Innenseite gewellt ausgebildet sind und somit einer Stauchung bzw. einer Streckung in geeigneter Weise nachgeben können. Hierzu sei erwähnt, dass die innere Schicht von aus dem Stand der Technik bekannten mehrschichtigen Fluidleitungen auf Grund ihrer Ausbildung bzw. Anordnung einen Widerstand gegenüber Streckung oder Stauchung bei einer Biegung der Fluidleitung deutlich erhöht.

Denkbar ist aber auch, dass nur ein Boden der Fluidleitung mit einer glatt verlaufenden inneren Schicht versehen ist. In diesem Fall kann ein dem Boden diametral gegenüberliegender Abschnitt der Fluidleitung zwar in Umfangsrichtung im Wesentlichen gerade verlaufend, aber dennoch an seiner Innenseite in axialer Richtung gewellt ausgebildet sein kann.

Insbesondere kann die innere Schicht die Innenseiten von zueinander benachbarten Wellentälern der äußeren Schicht im Wesentlichen geradlinig verbinden. Das heißt, in einer axialen Richtung (Haupterstreckungsrichtung) des Fluidströmungskanals betrachtet, verläuft die innere Schicht über einen Bereich mehrerer Wellenberge und Wellentäler der äußeren Schicht hinweg im Wesentlichen glatt. Dabei umfasst der Ausdruck "im Wesentlichen geradlinig" natürlich auch leichte Krümmungen bzw. eine leichte Wellung des Verlaufs der inneren Schicht, welche aufgrund eines Fertigungsverfahrens der erfindungsgemäßen Fluidleitung unvermeidbar sein kann. Dabei ist aber eine Amplitude einer Wellung der inneren Schicht deutlich geringer als eine Amplitude des Verlaufs der äußeren Schicht im Sinne der Abfolge von Wellenbergen und Wellentälern.

In einem Querschnitt betrachtet, welcher zu der Haupterstreckungsrichtung des Fluidströmungskanals rechtwinklig ist, kann ein Verhältnis einer größten Sehne der Fluidleitung zu einer kleinsten Sehne der Fluidleitung zwischen 1:2 und 1:3, insbesondere 1:2,5, betragen. Das Verhältnis zwischen größter Sehne der Fluidleitung und kleinster Sehne der Fluidleitung kann zusätzlich verdeutlichen, dass das Problem von unterschiedlichen Widerständen gegenüber einem Biegen in unterschiedlichen Richtungen der Fluidleitung besonders bei Fluidleitungen mit einem nicht-kreisförmigen Querschnitt auftreten kann.

Vorteilhafterweise kann sich, in Umfangsrichtung der Fluidleitung betrachtet, die innere Schicht im Bereich eines Übergangs zwischen Hauptfläche und Seitenabschnitt allmählich von zueinander benachbarte Wellentäler der äußeren Schicht in einer kürzeren Distanz verbindend zu dem Profil der äußeren Schicht im Wesentlichen folgend verändern. Das heißt, es kann ein Übergangsbereich ausgebildet werden, in welchem die innere Wand der Fluidleitung weder glatt noch der Abfolge von Wellenbergen und Wellentälern der äußeren Schicht vollständig folgend verläuft. In einem solchen Übergangsbereich kann die innere Schicht also von dem im Wesentlichen glatten Verlauf einer Hauptfläche an einer Seite des Übergangsbereichs allmählich zu dem gewellten Verlauf der Abfolge von Wellenbergen und Wellentälern der äußeren Schicht vollständig folgend verlaufen.

Diese Übergangsbereiche können sich auch in der äußeren Schicht bzw. der Gesamtgeometrie der Fluidleitung ausprägen. Beispielsweise kann zwischen einer Hauptfläche und einem Seitenabschnitt und/oder zwischen zwei Hauptflächen ein Übergangsbereich angeordnet sein, dessen Amplitude der Abfolge von Wellenbergen und Wellentälern der äußeren Schicht kleiner ist als die Amplitude im Bereich einer Hauptfläche. Zusätzlich oder alternativ kann die innere Schicht in einem derartigen Übergangsbereich deutlich gewellt, das heißt stärker als im Bereich einer Hauptfläche, aber nicht der Abfolge von Wellenbergen und Wellentälern in der gesamten Amplitude folgend, ausgebildet sein. Es ist auch denkbar, dass entlang einer Erstreckung eines Übergangsbereichs, in der Umfangsrichtung der Fluidleitung, zunächst eine sehr plötzliche Änderung der Ausbildung der inneren Schicht von im Wesentlichen glatt zu stärker gewellt angeordnet ist, sich dann diese Ausprägung der inneren Schicht über einen vorbestimmten Abschnitt des Übergangsbereichs, beispielsweise wenigstens 50%, insbesondere wenigstens 90%, der Gesamterstreckung des Übergangsbereichs in der Umfangsrichtung der Fluidleitung, unverändert erstreckt, und dann eine erneute plötzliche Änderung der Ausbildung der inneren Schicht von stärker gewellt zu im Wesentlichen glatt angeordnet ist, um in eine anschließende Hauptfläche überzugehen.

Alternativ oder zusätzlich kann, in Umfangsrichtung der Fluidleitung betrachtet, die innere Schicht im Bereich eines Übergangs zwischen Hauptfläche und Seitenabschnitt, abrupt enden. In anderen Worten ist es sowohl denkbar, dass die innere Schicht an einem Übergang zwischen einer Hauptfläche und einem Seitenabschnitt, insbesondere an einem Anfang oder einem Ende eines Übergangsbereichs, wie weiter oben erwähnt, schlagartig endet, ohne dass sich ihr im Wesentlichen glatter Verlauf in einer axialen Richtung der Fluidleitung in einer ausgeprägten Weise verändert hätte, als auch, dass die innere Schicht an einem Übergang zwischen einer Hauptfläche und einem Seitenabschnitt, insbesondere an einem Anfang oder einem Ende eines Übergangsbereichs, zunächst von dem im Wesentlichen glatten Verlauf in einen stärker gewellten Verlauf übergeht und erst dann abrupt endet. Für den Fall, dass die innere Schicht in Umfangsrichtung der Fluidleitung abrupt endet, kann dies bedeuten, dass lediglich im Bereich von Hauptflächen und gegebenenfalls von Übergangsbereichen eine innere Schicht vorhanden ist, wohingegen die Seitenabschnitte frei von einer inneren Schicht sind. Somit kann der Fluidströmungskanal durch die äußere Schicht im Bereich des wenigstens einen Seitenabschnitts und durch die innere Schicht im Bereich der wenigstens einen Hauptfläche und gegebenenfalls des wenigstens einen Übergangsbereichs, falls vorhanden, definiert sein. Dieses abrupte Enden kann insbesondere mit dem weiter unten beschriebenen Merkmal einer in Umfangsrichtung abnehmenden Schichtstärke der inneren Schicht kombiniert werden. Dabei sei darauf hingewiesen, dass ein "abruptes Ende" eine Änderung der Wandstärke der Fluidleitung, in Umfangsrichtung betrachtet, im Bereich von 0,01 mm bis 0,1 mm bedeuten kann.

Dabei sei hier außer Betracht gelassen, dass die Wandstärke der Fluidleitung, insbesondere der äußeren Schicht, fertigungstechnisch variieren kann. Beispielsweise beim Ausformen der Wellenberge kann eine Wandstärke im Bereich der Flanken, welche von einem Wellental zu einem Wellenberg führen, reduziert werden.

Vorteilhafterweise erstreckt sich die innere Schicht über die in Umfangsrichtung der Fluidleitung angeordneten Enden einer Hauptfläche zumindest soweit hinaus, dass Enden der inneren Schicht außerhalb einer Ebene angeordnet sind, welche durch die innere Schicht im Bereich der Hauptfläche definiert ist. Für den Fall, dass die Hauptfläche in Umfangsrichtung nicht gerade verläuft, kann diese Ebene als ein Bereich ausgebildet sein, außerhalb dessen die Enden der inneren Schicht angeordnet sind, welcher durch eine erste Ebene, welche, weiterhin in Umfangsrichtung der Fluidleitung betrachtet, durch die beiden entgegengesetzten Enden der Hauptfläche und in axialer Richtung des Fluidströmungskanals verläuft, und eine zu der ersten Ebene parallelen zweite Ebene definiert ist, welche durch wenigstens einen Punkt der Hauptfläche verläuft, welcher in Normalrichtung zu der ersten Ebene von der ersten Ebene am weitesten entfernt ist. Um ein Anschauungsbeispiel zu geben, soll angenommen werden, dass die erfindungsgemäße Fluidleitung mit einem Querschnitt in der Form des abgeflachten Ovals ausgebildet ist, wie weiter oben erläutert. Wenigstens eine der geraden Seiten ist hier als eine Hauptfläche, im Sinne eines "Bodens" der Fluidleitung, ausgebildet. In einem Zustand betrachtet, in welchem die Fluidleitung mit dieser Hauptfläche / dem Boden auf einem Untergrund aufliegt, endet die innere Schicht somit an einem höher (vertikal weiter oben) gelegenen Abschnitt der Fluidleitung als die innere Schicht im Bereich der Hauptfläche angeordnet ist.

Hierbei kann, in Umfangsrichtung der Fluidleitung betrachtet, an dem Ende der inneren Schicht eine Naht angeordnet sein, welche insbesondere weiter nach radial innen ragt als eine zu dem Fluidströmungskanal weisende Innenseite der inneren Schicht. Dies soll den Gedanken widerspiegeln, dass es möglich sein kann, die Fluidleitung unter Verwendung eines Extrusionsblasformverfahrens mittels eines Korrugators herzustellen. Dabei kann es ferner möglich sein, die Innenhaut nur in Bereichen von Hauptflächen zu extrudieren. Ermöglicht wird dies, durch ein sogenanntes "Abschnüren" der Wandstärke an den Bereichen eines Seitenabschnitts bzw. eines Übergangsbereichs. Diese Abschnürung kann an der Fluidleitung in Form einer Naht sichtbar werden. Das Abschnüren kann beispielsweise dadurch erreicht werden, dass zwei Düsenteile eines Blaskopfs des Korrugators soweit zusammengeführt werden bis eine Wandstärke der inneren Schicht derart dünn ist, dass sie einreist. Durch eine konische Gestaltung der beiden Düsenteile an den Seitenbereichen kann dies beidseitig möglich sein.

Die äußere Schicht und die innere Schicht können aus einem identischen Material ausgebildet sein. Insbesondere kann die äußere Schicht und/oder die innere Schicht Polyolefin, insbesondere Polypropylen oder Polyethylen, umfassen.

Ferner kann die innere Schicht eine größere Elastizität aufweisen als die äußere Schicht. Hierdurch kann die innere Schicht bei einer entsprechenden Biegung der Fluidleitung gestreckt werden, wodurch das Biegeverhalten der Fluidleitung weiter verbessert werden kann, da ein Widerstand der Fluidleitung bzw. der inneren Schicht gegenüber dieser entsprechenden Biegung der Fluidleitung reduziert werden kann.

In einer Ausführungsform der vorliegenden Erfindung können sich Hauptflächen der äußeren Schicht, insbesondere vollständig, im Wesentlichen parallel zueinander erstrecken. Dies kann beispielsweise in der weiter oben erwähnten Ausführungsform einer erfindungsgemäßen Fluidleitung mit dem Querschnitt in der Form des abgeflachten Ovals umgesetzt werden. Auch kann dies den weiteren Vorteil bieten, dass eine erfindungsgemäße Fluidleitung nicht nur in einer ersten Achsrichtung symmetrisch ausgebildet sein kann, sondern auch in einer zweiten Achsrichtung, welche in Bezug auf die erste Achsrichtung rechtwinklig ausgerichtet ist, wobei dies auch durch entsprechende anderweitige Querschnitte realisiert werden kann.

Alternativ kann zumindest eine Hauptfläche in wenigstens zwei Unterflächen unterteilt sein, welche zueinander gewinkelt angeordnet sind. Als "gewinkelt" soll hier eine Ausrichtung der beiden Unterflächen verstanden werden, welche von 180° und Vielfachen davon verschieden ist. So kann zum Beispiel eine der voranstehend erwähnten gerade verlaufenden Hauptflächen derart in Unterflächen unterteilt werden, dass sich von einem Seitenabschnitt eine erste in Umfangsrichtung der Fluidleitung gerade verlaufende Unterfläche dieser Hauptfläche erstreckt, dass sich dann an die erste Unterfläche eine gekrümmte zweite Unterfläche oder ein Übergangsbereich, wie oben dargelegt, anschließt, und dass sich an die gekrümmte zweite Unterfläche oder den Übergangsbereich eine dritte, ebenfalls gerade verlaufende, Unterfläche der Hauptfläche anschließt. An die dritte Unterfläche kann sich beispielsweise ein weiterer Seitenabschnitt anschließen, welcher dem einen Seitenabschnitt diametral gegenüberliegend ist. An denjenigen Enden der Seitenabschnitte, an welche keine entsprechende Unterfläche angrenzt, können die beiden Seitenabschnitte beispielsweise durch eine durchgehend geradlinig verlaufende weitere Hauptfläche verbunden sein. Eine derartige Fluidleitung weist somit einen Querschnitt auf, welcher näherungsweise die Form eines liegenden "D", jedoch mit einem spitzem "Bauch", ausbildet. Natürlich kann die erfindungsgemäße Fluidleitung auch mit verschiedensten anderen Querschnitten ausgebildet sein, wie beispielsweise einem D-förmigen Querschnitt (mit rundem "Bauch"), einem näherungsweise U-förmigen Querschnitt etc.

Die äußere Schicht kann HDPE umfassen und/oder die innere Schicht kann thermoplastisches Polyolefin (TPO) oder Ethylenvinylacetat (EVA) umfassen. Derartige Materialien können eine hohe Stabilität mit einer guten Biegbarkeit verbinden. HDPE bietet eine erhöhte Stabilität in der äußeren Schicht. TPO oder EVA sind besonders dehnbar bei geringem E-Modul. Des Weiteren lassen sich TPO und/oder EVA mit HDPE gut verbinden, beispielsweise verschweißen.

In einer Weiterbildung der vorliegenden Erfindung kann die äußere Schicht eine Wandstärke von 0,3 mm bis 0,8 mm, insbesondere von 0,6 mm, aufweisen und/oder die innere Schicht kann eine Wandstärke von 0,1 mm bis 0,4 mm, insbesondere von 0,3 mm, aufweisen. Derartige Wandstärken, das heißt Materialstärken, können eine hohe Stabilität mit einer guten Biegbarkeit verbinden.

Erfindungsgemäß ist die innere Schicht im Bereich der zu dem Fluidströmungskanal weisenden Innenseite eines jeweiligen Seitenabschnitts dem Profil der äußeren Schicht im Wesentlichen folgend angeordnet, so dass die Wandstärke der Fluidleitung im Bereich eines Seitenabschnitts, auch zwischen benachbarten Wellentälern, in etwa der Summe der Wandstärke von äußerer Schicht und innerer Schicht einer Hauptfläche entspricht. In dem voranstehend erwähnten Beispiel kann also die innere Schicht in Umfangsrichtung der Fluidleitung durchgängig umlaufend, das heißt im Wesentlichen durchbrechungsfrei, ausgebildet sein. In diesem Fall, können sich die innere Schicht und die äußere Schicht im Bereich eines Seitenabschnitts auch vermischen, so dass die innere Schicht und die äußere Schicht in eine einzige Schicht überführt werden. Insbesondere bei der Verwendung von gleichen Materialien für die innere Schicht und die äußere Schicht kann somit im Bereich eines Seitenabschnitts eine einheitliche Wand der Fluidleitung erzeugt werden. Diese Wand weist eine größere Wandstärke auf als die äußere Schicht im Bereich einer Hauptfläche. Für den Fall, dass die innere Schicht zwar in Umfangsrichtung durchgängig ausgebildet ist, aber im Bereich eines Seitenabschnitts sehr dünn ausgebildet ist, kann die Wandstärke der Fluidleitung im Bereich eines Seitenabschnitts in etwa der Wandstärke der äußeren Schicht an einer Hauptfläche entsprechen.

In einer nicht von den Ansprüchen abgedeckten Ausgestaltung kann eine zu dem Fluidströmungskanal weisende Innenseite eines jeweiligen Seitenabschnitts frei von der inneren Schicht sein, so dass die Wandstärke der Fluidleitung im Bereich eines Seitenabschnitts kleiner sein kann als die Wandstärke einer Hauptfläche (das heißt die Summe aus innerer Schicht und äußerer Schicht), insbesondere in etwa der Wandstärke der äußeren Schicht an einer Hauptfläche entsprechen kann. Wie bereits weiter oben erwähnt worden ist, kann zu diesem Zweck die innere Schicht vor einem jeweiligen Seitenabschnitt enden, so dass im Bereich eines Seitenabschnitts radial innen keine innere Schicht vorgesehen ist.

In einer Ausführungsform der vorliegenden Erfindung kann die Wandstärke der inneren Schicht und/oder der äußeren Schicht von einer in Umfangsrichtung der Fluidleitung betrachteten Mitte einer Hauptfläche zu ihren in Umfangsrichtung der Fluidleitung betrachteten Enden hin allmählich abnehmen. Hierdurch kann eine Reduktion der gesamten Wandstärke im Bereich eines Seitenabschnitts ermöglicht werden, wodurch eine Biegbarkeit der Fluidleitung weiter verbessert werden kann. Eine Reduktion der inneren Schicht von einer Mitte einer Hauptfläche zu ihren Enden hin kann ferner ermöglichen, dass, insbesondere bei einer Verwendung eines Extrusionsblasformverfahrens zur Herstellung der Fluidleitung, die innere Schicht weniger Widerstand gegenüber einer in den Fluidströmungskanal eingeführten Stützluft zum Ausbilden der Fluidleitung bietet und somit einfacher in jeweilige Innenseiten der Wellenberge geführt werden kann. Wird auch die Wandstärke der äußeren Schicht von einer Mitte einer Hauptfläche zu ihren Enden reduziert, das heißt eine Reduktion einer Stärke der Materialschicht, aus welcher die Abfolge von Wellenbergen und Wellentälern der äußeren Schicht ausgebildet ist, so kann verfahrenstechnisch eine höhere Stabilität erreicht werden.

Es ist ferner denkbar, dass die innere Schicht und/oder die äußere Schicht, vorteilhafterweise nur die innere Schicht, über zumindest einen Großteil, insbesondere über eine jeweilige gesamte Hauptfläche, mit einer im Wesentlichen gleichbleibenden Wandstärke versehen ist und sich die Wandstärke erst an einem Ende (oder beiden Enden) der Hauptfläche oder in einem Übergangsbereich, welcher weiter oben beschrieben worden ist, reduziert.

Die vorliegende Erfindung wird im Folgenden anhand eines Ausführungsbeispiels mit Bezug auf die begleitende Zeichnung in größerem Detail beschrieben werden. Es stellt dar:

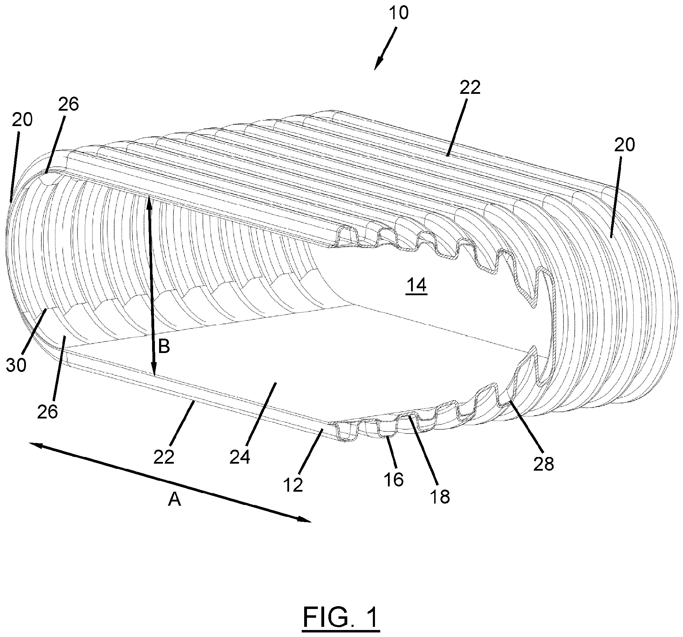

- FIG. 1: eine perspektivische, teilweise geschnittene Ansicht eines Abschnitts einer erfindungsgemäßen Fluidleitung.

In FIG. 1 ist eine erfindungsgemäße Fluidleitung allgemein mit dem Bezugszeichen 10 bezeichnet. Die Fluidleitung 10 umfasst eine äußere Schicht 12, welche in einer axialen Richtung der Fluidleitung 10, das heißt einer Haupterstreckungsrichtung eines Fluidströmungskanals 14, welcher im Inneren der Fluidleitung 10 gebildet ist, eine Abfolge von Wellenbergen 16 und Wellentälern 18 aufweist.

Die Fluidleitung 10 umfasst in dem hier dargestellten Ausführungsbeispiel zwei Seitenabschnitte 20 und zwei Hauptflächen 22, wobei die beiden Hauptflächen 22 zwischen den beiden Seitenabschnitten 20 gerade verlaufen und sich parallel zueinander erstrecken. Die beiden Seitenabschnitte 20 sind hier in der Form eines Halbkreisbogens ausgebildet. Diese Ausführungsform wurde weiter oben als "abgeflachtes Oval" bezeichnet.

Ferner ist in FIG. 1 erkennen, dass die Fluidleitung 10 eine innere Schicht 24 umfasst, welche mit der äußeren Schicht 12 im Bereich von Innenseiten der Wellentäler 18 verbunden ist. Die innere Schicht 24 erstreckt sich im Bereich der Hauptflächen 22 sowohl in axialer Richtung der Fluidleitung 10 als auch in Umfangsrichtung der Fluidleitung 10 (aufgrund der geraden Erstreckung der Hauptflächen 22 in Umfangsrichtung der Fluidleitung 10) im Wesentlichen geradlinig.

In Umfangsrichtung der Fluidleitung 10 betrachtet, schließt sich an eine jeweilige Hauptfläche 22 zu beiden Seiten ein Übergangsbereich 26 an, entlang welchem die innere Schicht 24 allmählich von dem glatten Verlauf in axialer Richtung der Fluidleitung 10, wie er im Bereich der Hauptflächen 22 ausgebildet ist, zu einem gewellten Verlauf übergeht, welcher im Wesentlichen einer Innenseite der Abfolge von Wellenbergen 16 und Wellentälern 18 der äußeren Schicht 12 folgt.

In dem in FIG. 1 dargestellten Ausführungsbeispiel ist an demjenigen Ende eines Übergangsbereichs 26, an welchem sich ein Seitenabschnitt 20 anschließt, die innere Schicht 24 auch an einer Innenseite eines Wellenbergs 16 der äußeren Schicht 12 mit der äußeren Schicht 12 verbunden (siehe Bezugszeichen 28). Da dem hier gezeigten Ausführungsbeispiel zu Grunde liegt, dass die innere Schicht 24 und die äußere Schicht 12 aus einem gleichen Material ausgebildet sind, verlaufen die beiden Schichten 12 und 24 über die Seitenabschnitte 20 hinweg als eine einzige Schicht, in welcher die beiden Schichten 12, 24 verschmolzen sind. Es ist also im Bereich eines Seitenabschnitts 20 eine innere Schicht 24 angeordnet, diese ist hier aber integral mit der äußeren Schicht 12 verbunden.

In nicht der Erfindung entsprechender Weise könnte an diesem Ende eines Übergangsbereichs 26, an welchem sich ein Seitenabschnitt 20 anschließt, die innere Schicht 24 abrupt entlang einer in axialer Richtung der Fluidleitung 10 verlaufenden Linie 30 enden, so dass an einer zu dem Fluidströmungskanal 14 weisenden Seite eines jeweiligen Seitenabschnitts 20 keine innere Schicht 24 angeordnet ist. Vorteilhafterweise kann die hier dargestellte Fluidleitung 10 mit einer der Hauptflächen 22 auf einen Untergrund aufgelegt werden, wobei durch die erfindungsgemäße Fluidleitung 10 aufgrund der im Wesentlichen glatten Ausbildung der inneren Schicht 24 im Bereich der Hauptflächen 22 verhindert werden kann, dass sich an einer Innenseite eines Wellenbergs 16 Schmutz bzw. Wasser ansammeln kann, da es aus der Fluidleitung 10 einfach abgeführt werden kann. Dazu ist bei der dargestellten Fluidleitung 10 vorgesehen, dass die innere Schicht 24, für den Fall, dass sie am Ende eines Übergangsbereichs 26 endet, an einer relativ zu der inneren Schicht 24 im Bereich einer Hauptfläche 22 höher gelegenen Stelle endet. In anderen Worten liegt die Line 30 in der in FIG. 1 gezeigten Anordnung der Fluidleitung 10 oberhalb der Oberseite der inneren Schicht 24 des Bodens 22 der Fluidleitung 10, so dass kein Schmutz/Kondenswasser von der inneren Schicht 24 des Bodens 22 seitlich unter die innere Schicht 24 des Bodens 22 fließen kann.

Aufgrund der erfindungsgemäßen Ausbildung der Fluidleitung 10 kann die Fluidleitung 10 sowohl um eine Achse, welche die beiden Seitenabschnitte 20 verbindet, als auch um eine Achse, welche die beiden Hauptflächen 22 verbindet, in einer leichteren Weise gebogen werden, wodurch ein Verlegen der erfindungsgemäßen Fluidleitung 10 vereinfacht werden kann.

In der Richtung des Pfeils A weist die in FIG. 1 dargestellte Ausführungsform einer erfindungsgemäßen Fluidleitung 10 eine größte Sehne auf, welche hier durch beide Seitenabschnitte 20 verläuft, und in der Richtung des Pfeils B weist die Fluidleitung 10 eine kleinste Sehne auf, welche hier durch beide Hauptflächen 22 verläuft. Sehne A und Sehne B sind hier senkrecht zueinander.

## Patentansprüche

1. Fluidleitung (10), welche in ihrem Inneren einen Fluidströmungskanal (14) definiert, umfassend
eine äußere Schicht (12), welche als Wellrohr mit einer Abfolge von Wellentälern (18) und Wellenbergen (16), welche nach radial außen weiter vorstehen als die Wellentäler (18), ausgebildet ist, und
eine innere Schicht (24), welche innerhalb der äußeren Schicht (12) aufgenommen ist,
wobei die äußere Schicht (12) in einem Querschnitt, welcher zu einer Haupterstreckungsrichtung des Fluidströmungskanals (14) rechtwinklig ist, eine Form aufweist, welche von einer Kreisform verschieden ist, und welche wenigstens einen Seitenabschnitt (20) sowie wenigstens eine Hauptfläche (22) umfasst,
wobei die innere Schicht (24) derart an der zu dem Fluidströmungskanal (14) weisenden Seite einer jeweiligen Hauptfläche (22) angebracht ist, dass, in einer im Wesentlichen geraden Ausrichtung der Fluidleitung (10), die innere Schicht (24) die Innenseiten von zueinander benachbarten Wellentälern (18) der äußeren Schicht (12) in einer kürzeren Distanz verbindet, verglichen mit dem Verlauf der äußeren Schicht (12) zwischen benachbarten Wellentälern (18) davon,
wobei
eine zu dem Fluidströmungskanal (14) weisende Innenseite eines jeweiligen Seitenabschnitts (20), der Abfolge von Wellentälern (18) und Wellenbergen (16) folgend, gewellt ausgebildet ist, **dadurch gekennzeichnet,**
**dass** die innere Schicht (24) im Bereich der zu dem Fluidströmungskanal (14) weisenden Innenseite eines jeweiligen Seitenabschnitts (20) dem Profil der äußeren Schicht (12) im Wesentlichen folgend angeordnet ist, so dass die Wandstärke der Fluidleitung (10) im Bereich eines Seitenabschnitts (20), auch zwischen benachbarten Wellentälern (18), in etwa der Summe der Wandstärke von äußerer Schicht (12) und innerer Schicht (24) entspricht.

2. Fluidleitung (10) nach Anspruch 1,
**dadurch gekennzeichnet, dass** die innere Schicht (24) die Innenseiten von zueinander benachbarten Wellentälern (18) der äußeren Schicht (12) im Wesentlichen geradlinig verbindet.

3. Fluidleitung (10) nach einem der vorhergehenden Ansprüche,
**dadurch gekennzeichnet, dass**, in einem Querschnitt betrachtet, welcher zu der Haupterstreckungsrichtung des Fluidströmungskanals (14) rechtwinklig ist, ein Verhältnis einer größten Sehne (A) der Fluidleitung (10) zu einer kleinsten Sehne (B) der Fluidleitung (10) zwischen 1:2 und 1:3, insbesondere 1:2,5, beträgt.

4. Fluidleitung (10) nach einem der vorhergehenden Ansprüche,
**dadurch gekennzeichnet, dass** sich, in Umfangsrichtung der Fluidleitung (10) betrachtet, die innere Schicht (24) im Bereich eines Übergangs (26) zwischen Hauptfläche (22) und Seitenabschnitt (20) allmählich von zueinander benachbarte Wellentäler (18) der äußeren Schicht (12) in einer kürzeren Distanz verbindend zu dem Profil der äußeren Schicht (12) im Wesentlichen folgend verändert.

5. Fluidleitung (10) nach einem der vorhergehenden Ansprüche,
**dadurch gekennzeichnet, dass**, in Umfangsrichtung der Fluidleitung (10) betrachtet, die innere Schicht (24) im Bereich eines Übergangs (26) zwischen Hauptfläche (22) und Seitenabschnitt (20), abrupt endet.

6. Fluidleitung (10) nach einem der Ansprüche 5,
**dadurch gekennzeichnet, dass**, in Umfangsrichtung der Fluidleitung (10) betrachtet, an dem Ende der inneren Schicht (24) eine Naht (30) angeordnet ist, welche insbesondere weiter nach radial innen ragt als eine zu dem Fluidströmungskanal (14) weisende Innenseite der inneren Schicht (24).

7. Fluidleitung (10) nach einem der vorhergehenden Ansprüche,
**dadurch gekennzeichnet, dass** die äußere Schicht (12) und/oder die innere Schicht (24) Polyolefin, insbesondere Polypropylen oder Polyethylen, umfasst.

8. Fluidleitung (10) nach einem der vorhergehenden Ansprüche,
**dadurch gekennzeichnet, dass** die innere Schicht (24) eine größere Elastizität aufweist als die äußere Schicht (12).

9. Fluidleitung (10) nach einem der vorhergehenden Ansprüche,
**dadurch gekennzeichnet, dass** sich Hauptflächen (22) der äußeren Schicht (12), insbesondere vollständig, im Wesentlichen parallel zueinander erstrecken.

10. Fluidleitung (10) nach einem der Ansprüche 1 bis 8,
**dadurch gekennzeichnet, dass** zumindest eine Hauptfläche (22) in wenigstens zwei Unterflächen unterteilt ist, welche zueinander gewinkelt angeordnet sind.

11. Fluidleitung (10) nach einem der vorhergehenden Ansprüche,
**dadurch gekennzeichnet, dass** die äußere Schicht (12) HDPE umfasst und/oder die innere Schicht (24) thermoplastisches Polyolefin (TPO) oder Ethylenvinylacetat (EVA) umfasst.

12. Fluidleitung (10) nach einem der vorhergehenden Ansprüche,
**dadurch gekennzeichnet, dass** die äußere Schicht (12) eine Wandstärke von 0,3 mm bis 0,8 mm, insbesondere von 0,6 mm, aufweist und/oder die innere Schicht (24) eine Wandstärke von 0,1 mm bis 0,4 mm, insbesondere von 0,3 mm, aufweist.

13. 1 <1. Fluidleitung (10) nach einem der vorhergehenden Ansprüche,
**dadurch gekennzeichnet, dass** die Wandstärke der inneren Schicht (24) und/oder der äußeren Schicht (12) von einer in Umfangsrichtung der Fluidleitung (10) betrachteten Mitte einer Hauptfläche (22) zu ihren in Umfangsrichtung der Fluidleitung (10) betrachteten Enden hin allmählich abnimmt.

## Claims

1. Fluid line (10), which defines a fluid flow channel (14) in its interior, comprising
an outer layer (12) which is designed as a corrugated tube having a sequence of wave troughs (18) and wave crests (16), which protrude further radially outwards than the wave troughs (18), and comprising an inner layer (24) which is accommodated within the outer layer (12),
the outer layer (12), in a cross section which is perpendicular to a main extension direction of the fluid flow channel (14), having a shape which is different to a circular shape and which comprises at least one side portion (20) and at least one main surface (22),
the inner layer (24) being attached to the side of a relevant main surface (22) that faces the fluid flow channel (14), such that, in a substantially straight orientation of the fluid line (10), the inner layer (24) connects the inner sides of adjacent wave troughs (18) of the outer layer (12) at a shorter distance, compared to the profile of the outer layer (12) between adjacent wave troughs (18) thereof,
an inner side of a relevant side portion (20), which faces the fluid flow channel (14), being corrugated following the sequence of wave troughs (18) and wave crests (16), **characterised in that**
the inner layer (24), in the region of the inner side of a relevant side portion (20), which faces the fluid flow channel (14), is arranged so as to substantially follow the profile of the outer layer (12), so that the wall thickness of the fluid line (10) in the region of a side portion (20), including between adjacent wave troughs (18), approximately corresponds to the sum of the wall thickness of the outer layer (12) and the inner layer (24).

2. Fluid line (10) according to claim 1,
**characterised in that** the inner layer (24) connects the inner sides of adjacent wave troughs (18) of the outer layer (12) substantially in a straight line.

3. Fluid line (10) according to either of the preceding claims,
**characterised in that,** viewed in a cross section which is perpendicular to the main extension direction of the fluid flow channel (14), a ratio of a largest chord (A) of the fluid line (10) to a smallest chord (B) of the fluid line (10) is between 1:2 and 1:3, in particular 1:2.5.

4. Fluid line (10) according to any of the preceding claims,
**characterised in that,** viewed in the circumferential direction of the fluid line (10), the inner layer (24) in the region of a transition (26) between the main surface (22) and the side portion (20) gradually changes from connecting adjacent wave troughs (18) of the outer layer (12) at a shorter distance, to substantially following the profile of the outer layer (12).

5. Fluid line (10) according to any of the preceding claims,
**characterised in that,** viewed in the circumferential direction of the fluid line (10), the inner layer (24) ends abruptly in the region of a transition (26) between the main surface (22) and the side portion (20).

6. Fluid line (10) according to any of claims 5,
**characterised in that,** viewed in the circumferential direction of the fluid line (10), a seam (30) is arranged at the end of the inner layer (24), which seam in particular projects further radially inwards than an inner side of the inner layer (24) that faces the fluid flow channel (14).

7. Fluid line (10) according to any of the preceding claims,
**characterised in that** the outer layer (12) and/or the inner layer (24) comprises polyolefin, in particular polypropylene or polyethylene.

8. Fluid line (10) according to any of the preceding claims,
**characterised in that** the inner layer (24) has a greater elasticity than the outer layer (12).

9. Fluid line (10) according to any of the preceding claims,
**characterised in that** main surfaces (22) of the outer layer (12) extend, in particular completely, substantially in parallel with one another.

10. The connection unit (10) according to any of claims 1 to 8,
**characterised in that** at least one main surface (22) is divided into at least two sub-surfaces which are arranged at an angle to one another.

11. Fluid line (10) according to any of the preceding claims,
**characterised in that** the outer layer (12) comprises HDPE and/or the inner layer (24) comprises thermoplastic polyolefin (TPO) or ethylene vinyl acetate (EVA).

12. Fluid line (10) according to any of the preceding claims,
**characterised in that** the outer layer (12) has a wall thickness of 0.3 mm to 0.8 mm, in particular 0.6 mm, and/or the inner layer (24) has a wall thickness of 0.1 mm to 0.4 mm, in particular 0.3 mm.

13. Fluid line (10) according to any of the preceding claims,
**characterised in that** the wall thickness of the inner layer (24) and/or the outer layer (12) gradually decreases from a centre of a main surface (22), viewed in the circumferential direction of the fluid line (10), to the ends thereof, viewed in the circumferential direction of the fluid line (10).

## Revendications

1. Conduite de fluide (10) qui définit à l'intérieur un canal d'écoulement de fluide (14), comprenant
une couche extérieure (12) réalisée sous forme de tube ondulé avec une succession de creux (18) et de crêtes (16), lesquelles font saillie radialement vers l'extérieur plus loin que les creux (18), et
une couche intérieure (24) logée à l'intérieur de la couche extérieure (12), dans laquelle
la couche extérieure (12), vue en section transversale perpendiculaire à une direction d'extension principale du canal d'écoulement de fluide (14), présente une forme différente d'une forme circulaire et comprend au moins une partie latérale (20) et au moins une surface principale (22),
la couche intérieure (24) est fixée au côté d'une surface principale respective (22) tourné vers le canal d'écoulement de fluide (14) de telle sorte que, dans une orientation sensiblement droite de la conduite de fluide (10), la couche intérieure (24) relie les côtés intérieurs des creux (18), mutuellement adjacents, de la couche extérieure (12) à une distance plus courte par comparaison avec l'allure de la couche extérieure (12) entre les creux adjacents (18) de celle-ci,
un côté intérieur d'une partie latérale respective (20), tourné vers le canal d'écoulement de fluide (14), est ondulé en suivant la succession de creux (18) et de crêtes (16),
**caractérisée en ce que**
dans la zone du côté intérieur d'une partie latérale respective (20), tourné vers le canal d'écoulement de fluide (14), la couche intérieure (24) est disposée de manière à suivre sensiblement le profil de la couche extérieure (12), de sorte que dans la zone d'une partie latérale (20), également entre les creux adjacents (18), l'épaisseur de paroi de la conduite de fluide (10) correspond approximativement à la somme des épaisseurs de paroi de la couche extérieure (12) et de la couche intérieure (24).

2. Conduite de fluide (10) selon la revendication 1,
**caractérisée en ce que** la couche intérieure (24) relie de manière sensiblement rectiligne les côtés intérieurs des creux (18) mutuellement adjacents de la couche extérieure (12).

3. Conduite de fluide (10) selon l'une des revendications précédentes, **caractérisée en ce que**, vue en section transversale perpendiculaire à la direction d'extension principale du canal d'écoulement de fluide (14), un rapport entre une corde la plus grande (A) de la conduite de fluide (10) et une corde la plus petite (B) de la conduite de fluide (10) est compris entre 1:2 et 1:3, en particulier 1:2,5.

4. Conduite de fluide (10) selon l'une des revendications précédentes, **caractérisée en ce que**, vue en direction circonférentielle de la conduite de fluide (10), dans la zone d'une transition (26) entre la surface principale (22) et la partie latérale (20), la couche intérieure (24) change progressivement pour passer des creux (18) mutuellement adjacents de la couche extérieure (12), à une distance plus courte, au profil de la couche extérieure (12), en suivant sensiblement ce dernier.

5. Conduite de fluide (10) selon l'une des revendications précédentes, **caractérisée en ce que**, vue en direction circonférentielle de la conduite de fluide (10), la couche intérieure (24) se termine brusquement dans la zone d'une transition (26) entre la surface principale (22) et la partie latérale (20).

6. Conduite de fluide (10) selon la revendication 5,
**caractérisée en ce que**, vue en direction circonférentielle de la conduite de fluide (10), une jointure (30) est disposée à l'extrémité de la couche intérieure (24), laquelle fait saillie en particulier plus loin radialement vers l'intérieur qu'un côté intérieur de la couche intérieure (24) tourné vers le canal d'écoulement de fluide (14).

7. Conduite de fluide (10) selon l'une des revendications précédentes, **caractérisée en ce que** la couche extérieure (12) et/ou la couche intérieure (24) comprend une polyoléfine, en particulier du polypropylène ou du polyéthylène.

8. Conduite de fluide (10) selon l'une des revendications précédentes, **caractérisée en ce que** la couche intérieure (24) présente une élasticité supérieure à celle de la couche extérieure (12).

9. Conduite de fluide (10) selon l'une des revendications précédentes, **caractérisée en ce que** les surfaces principales (22) de la couche extérieure (12) s'étendent, en particulier entièrement, sensiblement parallèlement les unes aux autres.

10. Conduite de fluide (10) selon l'une des revendications 1 à 8, **caractérisée en ce qu'**au moins une surface principale (22) est divisée en au moins deux sous-surfaces qui sont disposées selon un angle l'une par rapport à l'autre.

11. Conduite de fluide (10) selon l'une des revendications précédentes, **caractérisée en ce que** la couche extérieure (12) comprend du PEHD, et/ou la couche intérieure (24) comprend de la polyoléfine thermoplastique (TPO) ou de l'éthylène-acétate de vinyle (EVA).

12. Conduite de fluide (10) selon l'une des revendications précédentes, **caractérisée en ce que** la couche extérieure (12) présente une épaisseur de paroi de 0,3 mm à 0,8 mm, en particulier de 0,6 mm, et/ou la couche intérieure (24) présente une épaisseur de paroi de 0,1 mm à 0,4 mm, en particulier de 0,3 mm.

13. Conduite de fluide (10) selon l'une des revendications précédentes, **caractérisée en ce que** l'épaisseur de paroi de la couche intérieure (24) et/ou de la couche extérieure (12) diminue progressivement depuis un centre d'une surface principale (22), vu en direction circonférentielle de la conduite de fluide (10), vers ses extrémités, vues en direction circonférentielle de la conduite de fluide (10).
